**Europäisches Patentamt**

**European Patent Office**

**Office européen des brevets**

(19)

(11) Veröffentlichungsnummer: **0 111 594**

**B1**

(12)

# EUROPÄISCHE PATENTSCHRIFT

(45) Veröffentlichungstag der Patentschrift:
15.10.86

(21) Anmeldenummer: **82112035.9**

(22) Anmeldetag: **27.12.82**

(51) Int. Cl.⁴: **B 62 J 7/04**

(54) **Haltewinkel.**

(30) Priorität: **01.12.82 DE 3244465**

(43) Veröffentlichungstag der Anmeldung:
**27.06.84 Patentblatt 84/26**

(45) Bekanntmachung des Hinweises auf die Patenterteilung:
**15.10.86 Patentblatt 86/42**

(84) Benannte Vertragsstaaten:
**AT BE CH DE FR GB IT LI LU NL SE**

(56) Entgegenhaltungen:
**DE-U-7 707 615**

(73) Patentinhaber: **KRAUSER Kraftfahrzeug- Zubehör Vertriebs- GmbH, Hörmannsbergerstrasse 18, D-8905 Mering (DE)**

(72) Erfinder: **Krauser, Michael, Obere Bahnhofstrasse 56- 60, D-8034 Germering (DE)**

(74) Vertreter: **von Kirschbaum, Albrecht, Dipl.- Ing., Hermann- Ehlers- Strasse 21a, D-8034 Germering (DE)**

LIBER, STOCKHOLM 1986

## Beschreibung

Die Erfindung betrifft Haltewinkel zur Befestigung eines zwei Halterungsrahmen für Motorradkoffer verbindenden Querteils nach dem Oberbegriff des Anspruchs 1.

Wenn an einem Motorrad seitlich Halterungsrahmen zur Aufnahme von Motorradkoffern angebracht sind, sollten diese Halterungsrahmen an ihren (in Fahrtrichtung gesehen) hinteren Enden durch ein stabilisierendes Querteil vorzugsweise in Form eines U-förmigen Querbügels miteinander verbunden sein; durch diesen Verbindungsbügel werden durch Erschütterungen, Straßenunebenheiten u.ä. hervorgerufene Schwingungen der Halterungsrahmen weitgehend unterbunden oder zumindest so stark gedämpft, daß dadurch das Fahrverhalten eines Motorrads nicht mehr stark beeinträchtigt wird.

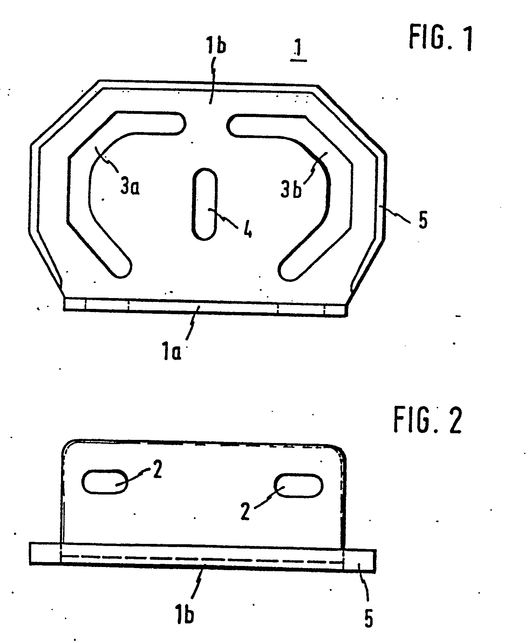

Zur Anbringung eines stabilisierenden Querbügels an den (in Fahrtrichtung gesehen) hinteren Enden der Halterungsrahmen sind an diesen sogenannte Haltewinkel 1 angebracht (siehe Fig. 1 und 2). Diese einstückigen Haltewinkel 1 sind in Draufsicht L-förmig ausgebildet und mit einem kurzen bzw. schmalen Schenkel 1a etwa in der Mitte eines sich nach unten erstreckenden Verbindungsteils eines Halterungsrahmens so angebracht, daß der längere bzw. breitere Schenkel 1b eines Haltewinkels etwa parallel zur Längsachse des Motorrads verläuft. (Siehe beispielsweise Fig. 1 des deutschen Gebrauchsmusters DE-U- 77 07 615). Zur Befestigung des Haltewinkels 1 an einem (nicht näher dargestellten) Halterungsrahmen sind in dem schmalen Schenkel 1a zwei ovale Löcher 2 vorgesehen. In dem breiteren Schenkel 1b des Haltewinkels 1 sind eine obere und untere etwa halbkreisförmige Kulisse 3a bzw. 3b und in der Mitte ein Längsschlitz 4 ausgebildet.

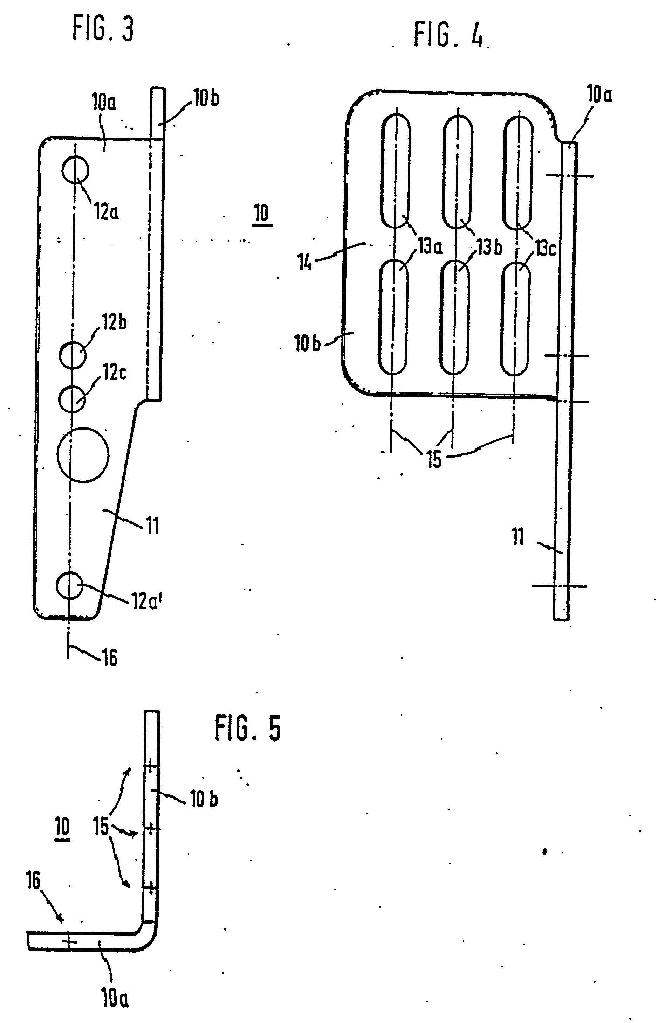

Ein zur Stabilisierung von zwei Halterungsrahmen verwendeter, einstückiger und in Draufsicht U-förmig ausgebildeter Querbügel oder ein aus zwei L-förmigen Teilen zusammengesetzter Querbügel weisen in ihren kurzen Schenkeln Längsausnehmungen auf, wie beispielsweise aus Fig. 3 der DE-C-30 32 312 zu ersehen ist. Unter Berücksichtigung der Ausführung des Heckteils eines Motorrads werden dann Befestigungsschrauben durch die beiden Längsschlitze in den kurzen Schenkeln eines Querbügels und entweder durch eine der Kulissen 3a oder 3b oder durch das quer verlaufende Längsloch 4 hindurchgeführt und mittels Zahnscheiben oder Sprengringen sowie Muttern in der für günstig gehaltenen Stellung gesichert. Hierbei können die bekannten Haltewinkel 1 entsprechend der Ausbildung des Heckteils eines Motorrads mit ihren schmalen Schenkeln entweder so befestigt werden, daß deren breiterer Schenkel, in der Fahrtrichtung gesehen, nach hinten vorsteht, oder die Haltewinkel können bezüglich der vorstehend beschriebenen Anbringung um 180° gedreht angebracht werden, so daß ihre breiteren Schenkel, in der Fahrtrichtung gesehen, nach vorne vorstehen. Die zuletzt beschriebene Anbringung der Haltewinkel ist insbesondere dann zweckmäßig und vorteilhaft, wenn die Halterungsrahmen ein Stück beispielsweise über das hintere Schutzblech eines Motorrads vorstehen; durch diese Art der Anbringung der Haltewinkel ist dann der stabilisierende Querbügel ein Stück näher bei dem Schutzblech angeordnet. Bei Verwendung des bekannten, in Fig.1 und 2 dargestellten Haltewinkels kann ein stabilisierender Querbügel in einem Bereich angebracht werden, welcher etwa der doppelten Fläche des breiteren Schenkels 1b des bekannten Haltewinkels 1 entspricht, da dieser, wie vorstehend ausgeführt, an dem Halterungsrahmen so angebracht werden kann, daß sein breiterer Schenkel in Fahrtrichtung gesehen nach hinten oder nach vorne verläuft.

Bei der Vielzahl von Motorradtypen, die derzeit angeboten werden, reicht der beschriebene Haltewinkel verschiedentlich nicht aus, um den stabilisierenden Querbügel in einer bezüglich des Heckteils eines Motorrads zweckmäßigen und hinsichtlich der zu erzielenden Stabilisierung günstigen Lage anzubringen.

Aufgabe der Erfindung ist es daher, Haltewinkel so auszubilden, daß ohne eine nennenswerte Vergrößerung des einzelnen Haltewinkels gegenüber den bekannten Haltewinkeln die zur Anbringung eines Querbügels verfügbare Fläche etwa verdoppelt wird und diese vergrößerte Fläche noch dazu besser ausnutzbar ist, und daß sie verdrehungssicherer an Halterungsrahmen anbringbar sind. Gemäß der Erfindung ist dies bei Haltewinkeln nach dem Oberbegriff des Anspruchs 1 durch die Merkmale im kennzeichnenden Teil des Anspruchs 1 erreicht. Vorteilhafte Weiterbildungen von erfindungsgemäßen Haltewinkeln sind in den Unteransprüchen angegeben.

Gemäß einer bevorzugten Ausführungsform weist der schmale Schenkel jedes Haltewinkels auf einer Seite eine Verlängerung und jeweils mindestens drei einander zugeordnete Befestigungslöcher auf. Aufgrund der Verlängerung und der dadurch möglichen Unterbringung von mindestens drei einander zugeordneten Befestigungslöchern in den schmalen Schenkeln der erfindungsgemäßen Haltewinkel können diese verdrehungssicherer und damit fester an den jeweiligen Halterungsrahmen befestigt werden, so daß durch Erschütterungen, Straßenunebenheiten, Zentrifugalkräfte u.ä. hervorgerufene Schwingungen von an einem Motorrad angebrachten Halterungsrahmen durch einen die Halterungsrahmen verbindenden Querbügel besser aufgefangen werden und noch besser verhindert werden kann, daß die beiden Halterungsrahmen stärkere, oft gegenläufige Schwingbewegungen ausführen. Um nicht zu viele Löcher in dem schmalen Schenkel des erfindungsgemäßen Haltewinkels vorsehen zu müssen, sind gemäß einer bevorzugten Ausführungsform die jeweils mindestens drei einander zugeordneten Löcher durch zwei Paar in der Längsachse des schmalen Schenkels spiegelbildlich zu dessen Mitte angeordnete Löcher gebildet, so daß in dem schmalen Schenkel des erfindungsgemäßen Haltebügels insgesamt vier der Befestigung dienende Löcher vorgesehen sind. Aufgrund dieser Ausbildung und Anordnung von jeweils drei einander zugeordneten Löchern kann jeder Haltewinkel in zwei verschiedenen Lagen an dem Verbindungsteil eines Halterungsrahmens angebracht werden, so daß dann die Verlängerung des schmalen Schenkels eines Haltewinkels entweder nach oben oder nach unten weist.

Ferner können gemäß einer bevorzugten Ausführungsform in dem breiten Schenkel des erfindungsgemäßen Haltewinkels mindestens drei Längsausnehmungen so ausgerichtet sein, daß deren Längsachsen parallel zueinander und parallel oder senkrecht zur Längsachse des verlängerten schmalen Schenkels des Haltewinkels verlaufen. Vorzugsweise können ferner mindestens drei paarweise angeordnete Längsausnehmungen so ausgebildet sein, daß ihre Längsachsen parallel zueinander und parallel zur Längsachse des verlängerten schmalen Schenkels verlaufen, und zwischen den paarweise angeordneten Längsausnehmungen ein sie verbindender Steg übrigbleibt. Durch diese Ausbildung und Anordnung der Längsausnehmungen in dem breiteren Schenkel eines erfindungsgemäßen Haltewinkels kann in Verbindung mit Langlöchern in den kürzeren Schenkeln eines stabilisierenden Querbügels dieser einstellbar im gesamten Bereich der durch den breiteren Schenkel zur Verfügung gestellten Fläche befestigt werden. Damit die erfindungsgemäßen Haltewinkel an zwei auf beiden Seiten eines Motorrades vorgesehenen Halterungsrahmen in der gleichen Stellung angebracht werden können, sind zwei zueinander spiegelbildlich ausgebildete Haltewinkel gemäß der Erfindung erforderlich; das heißt, bezogen auf den verlängerten schmalen Schenkel des Haltewinkels sind bei einem zusammenpassenden Haltewinkelpaar die breiteren Schenkel auf verschiedenen Seiten des schmalen verlängerten Schenkels angeordnet. Wenn dann noch die vorstehend beschriebene Möglichkeit berücksichtigt wird, daß der schmale verlängerte Schenkel so an dem Verbindungsteil der Halterungsrahmen angebracht werden kann, daß die Verlängerung entweder nach unten oder nach oben vorsteht, kann durch ein zusammenpassendes Haltewinkelpaar, je nachdem, wie die Winkel an den Halterungsrahmen angebracht sind, insgesamt eine Fläche überdeckt werden, welche der vierfachen Fläche des breiteren Schenkels eines Haltewinkels entspricht.

Bei Verwendung eines gemäß der Erfindung ausgebildeten Haltewinkelpaars kann somit ein stabilisierender Querbügel in Abhängigkeit von der Ausbildung der Heckpartie eines Motorrads innerhalb einer Fläche einstellbar angebracht werden, welche in der Größenordnung der vierfachen Fläche des breiteren Schenkels des erfindungsgemäßen Haltewinkels liegt. Aufgrund der flächenüberdeckenden Anbringung der kurzen Schenkel eines L-förmigen Querbügels kann diese Fläche durch den erfindungsgemäßen Haltewinkel voll und damit besser als bei dem eingangs beschriebenen, bekannten Haltewinkel ausgenutzt werden. Im Unterschied zu dem erfindungsgemäßen Haltewinkel, mit welchem mindestens die vierfache Fläche des breiteren Schenkels überdeckt werden kann, kann, wie eingangs bereits ausgeführt, mit dem bekannten Haltewinkel nur etwa die doppelte Fläche dessen breiteren Schenkels überdeckt werden, wobei aufgrund der Ausbildung der beiden Kulissen und des Längsloches diese Fläche nicht immer voll ausgenutzt werden kann.

Nachfolgend wird die Erfindung anhand einer bevorzugten Ausführungsform unter Bezugnahme auf die anliegenden Zeichnungen im einzelnen erläutert. Es zeigen:

Fig. 1 eine Draufsicht auf einen breiteren Schenkel eines bekannten Haltewinkels;

Fig. 2 eine Draufsicht auf den schmalen Schenkel des bekannten Haltewinkels;

Fig. 3 eine Draufsicht auf einen schmalen Schenkel eines Haltewinkels gemäß der Erfindung;

Fig. 4 eine Draufsicht auf einen breiteren Schenkel eines Haltewinkels gemäß der Erfindung, und

Fig. 5 eine Draufsicht auf beide Schenkel eines im Querschnitt etwa L-förmigen Haltewinkels gemäß der Erfindung.

In Fig. 3 ist eine Draufsicht auf einen schmalen Schenkel 10a eines Haltewinkels 1 wiedergegeben, wobei dessen breiterer Schenkel 10b senkrecht zur Zeichenebene in diese Zeichenebene, d.h. vom Betrachter aus gesehen, nach unten vorsteht. An dem schmalen Schenkel 10a des Haltewinkels 1 ist, in Fig. 3 unten, eine Verlängerung 11 ausgebildet. Entlang einer Längsachse 16 sind in Fig. 3 insgesamt vier gleichgroße Löcher 12a, 12b, 12c und 12a' so ausgebildet, daß bezüglich einer nicht näher bezeichneten Mittellinie, welche genau in der Mitte zwischen den beiden Löchern 12b und 12c verlaufen würde, die Löcherpaare 12a und 12b bzw. 12c und 12a' jeweils spiegelbildlich angeordnet sind. Aufgrund dieser Anordnung der Löcher entlang der Längsachse 16 und spiegelbildlich zu einer gedachten Mittellinie zwischen den Löchern 12b und 12c können zur Befestigung eines Haltewinkels 1 beispielsweise an einem Verbindungsteil eines Halterungsrahmens immer drei Löcher benutzt werden, nämlich entweder die drei einander zugeordneten Löcher 12a, 12b und 12c oder 12a', 12c und 12b. Somit kann der erfindungsgemäße Haltewinkel 1 immer mittels drei Schrauben an einem Halterungsrahmen verdrehungssicherer und damit insgesamt fester angebracht werden.

In Fig. 4 ist eine Draufsicht auf einen breiteren Schenkel 10b des erfindungsgemäßen Haltewinkels wiedergegeben, wobei in Fig. 4 der schmale Schenkel 10a des Haltewinkels 1 senkrecht zur Zeichenebene, vom Betrachter aus gesehen, senkrecht nach oben vorsteht. In der dargestellten Ausführungsform sind in dem breiteren Schenkel 10b in gleichen Abständen voneinander drei paarweise ausgebildete Längsausnehmungen 13a bis 13c vorgesehen; zwischen den einzelnen Längsausnehmungen 13a bis 13c ist ein durchgehender Verbindungssteg 14 belassen, wodurch die Festigkeit und Stabilität des breiteren Schenkels und damit eines Haltewinkels 1 insgesamt erhöht ist. Da im allgemeinen in dem kurzen Schenkel eines einstückigen oder aus zwei L-förmigen Teilen gebildeten Querbügels ein Langloch ausgebildet ist, können sowohl der Verbindungssteg 14 in Richtung der Längsachsen 15 als auch die nicht näher bezeichneten Stege entlang der Längsausnehmungen 13a bis 13c ohne weiteres überbrückt werden. Somit kann aufgrund der erfindungsgemäßen Ausbildung der Längsausnehmungen in dem breiteren Schenkel 10b eines Haltewinkels die durch diesen Schenkel überdeckte Fläche bei der Anbringung eines Querbügels voll ausgenutzt werden. In Fig. 5 ist lediglich eine Draufsicht von oben auf den schmalen Schenkel 10a und den breiteren Schenkel 10b des erfindungsgemäßen Haltewinkels dargestellt, wobei die Längsachsen 15 in dem breiteren Schenkel bzw. die Längsachse 16 in dem schmalen Schenkel lediglich strichpunktiert angedeutet sind.

Bei der in Fig. 3 bis 5 wiedergegebenen Ausführung handelt es sich um eine sogenannte linksseitige Ausführung eines Haltewinkels; die entsprechende sogenannte rechtsseitige Ausführung des erfindungsgemäßen Haltewinkels ist spiegelbildlich zu der in Fig. 3 bis 5 wiedergegebenen Ausführungsform ausgebildet. Das bedeutet, bei der rechtsseitigen Ausführung würde im Unterschied zu Fig. 3 der breitere Schenkel 10b aus der Zeichenebene heraus nach oben vorstehen, während im Unterschied zu der Darstellung in Fig. 4 der schmale Schenkel 10b in die Zeichenebene hinein, d.h. vom Betrachter aus gesehen nach unten, vorstehen würde. Mit einer linksseitigen und einer rechtsseitigen Ausführung eines Haltewinkelpaares kann dann bei entsprechender spiegelbildlicher Anbringung der Haltewinkel an den beiden Halterahmen ein Querbügel in Anpassung an die Ausbildung der Heckpartie eines Motorrads in einem Bereich angeordnet werden, der in der Größenordnung von mindestens der vierfachen Fläche des breiteren Schenkels 10b eines erfindungsgemäßen Haltewinkelpaares liegt.

## Patentansprüche

1. Haltewinkel zur Befestigung eines zwei Halterungsrahmen für Motorradkoffer verbindenden Querbügels, welche einstückigen Haltewinkel jeweils aus zwei senkrecht zueinander angeordneten Schenkeln bestehen, und zwar einem Schenkel mit Löchern zur Befestigung an dem Halterungsrahmen und einem breiteren Schenkel mit Ausnehmungen zum einstellbaren Anbringen des Querbügels, dadurch gekennzeichnet, daß der schmale Schenkel (10a) jedes Haltewinkels (10) auf einer Seite eine Verlängerung (11) und jeweils mindestens drei einander zugeordnete Löcher (12a, 12b, 12c; 12a', 12c, 12b) aufweist, und daß in dem breiteren Schenkel (10b) mindestens drei Längsausnehmungen (13a, 13b, 13c) so ausgerichtet sind, daß deren Längsachsen (15) parallel zueinander und paralle oder senkrecht zur Längsachse (16) des verlängerten schmalen Schenkels (10a) verlaufen.

2. Haltewinkel nach Anspruch 1, dadurch gekennzeichnet, daß die jeweils mindestens drei einander zugeordneten Löcher in dem schmalen, verlängerten Schenkel (10a) durch zwei Paar in dessen Längsachse (16) spiegelbildlich zu dessen Mitte angeordnete Löcher (12a, 12b, 12c; 12a', 12c, 12b) gebildet sind.

3. Haltewinkel nach Anspruch 1, dadurch gekennzeichnet, daß mindestens drei paarweise angeordnete Längsausnehmungen (13a, 13b, 13c) ausgebildet sind, deren Längsachsen (15) parallel zueinander und parallel zur Längsachse des verlängerten, schmalen Schenkels (10a) verlaufen.

4. Haltewinkel nach einem der vorhergehenden Ansprüche, dadurch gekennzeichnet, daß die Haltewinkel (10) aus galvanisch verzinktem, 3mm dickem Blech gestanzt sind.

## Claims

1. Mounting angle brackets for the attachment of a transverse strap connecting two mounting frames for motorcycle panniers, which one piece angle brackets each consists of two limbs each arranged perpendicularly to the other and namely one limb with holes for attachment to the mounting frame and a wider limb for ths adjustable fitting of the transverse strap, characterissd thereby, that the narrow limb (10a) of sach mounting angle bracket (10) on one side displays a prolongation (11) and each time at least three mutually associated holes (12a, 12b, 12c; 12a', 12c, 12b) and that at least three longitudinal recesses (13a, 13b, 13c) are so oriented in the wider limb (10b) that their longitudinal axes (15) extend parallelly each to the other and to the longitudinal axis (16) of the prolonged narrow limb (10a).

2. Mounting angle brackets according to claim 1, characterised thereby, that the each time at least three mutually associated holes are formed in the prolonged narrow limb (10a) by two pairs of holes (12a, 12b, 12c; 12a', 12c, 12b) arranged in its longitudinal axis (16) and in mirror image to its centre.

3. Mounting angle brackets according to claim 1, characterised thereby, that at least three longitudinal recesses (13a, 13b, 13c) are formed, which are arranged in pairs and the longitudinal axes (15) of which extend parallelly each to the other and to the longitudinal axis of the prolonged narrow limb (10a).

4. Mounting angle brackets according to one of the preceding claims, characterised thereby, that the mounting angle brackets are punched out of sheet metal which has a thickness of 3 millimetres and been electroplated with zinc.

**Revendications**

1. Cornières de fixation pour l'ancrage d'un étrier transversal solidarisant deux cadres de retenue pour sacoches de motocyclettes, ces cornières de fixation monobloc comprenant à chaque fois deux branches mutuellement perpendiculaires, c'est-à-dire une branche percée de trous en vue de la fixation au cadre de retenue et une branche plus large présentant des évidements pour l'installation réglable de l'étrier transversal, caractérisées par le fait que la branche étroite (10a) de chaque cornière de fixation (10) comporte d'un côté un prolongement (11), ainsi qu'au moins trois trous respectivement associés (12a, 12b, 12c; 12a', 12c, 12b); et par le fait qu'au moins trois évidements longitudinaux (13a, 13b, 13c) ménagés dans la branche plus large (10b) sont orientés de telle sorte que leurs axes longitudinaux (15) s'étendent parallèlement les uns aux autres, et parallèlement ou perpendiculairement à l'axe longitudinal (16) de la branche étroite (10a) prolongée.

2. Cornières de fixatian selon la revendication 1, caractérisées par le fait que les trois trous respectivement associés, prévus au minimum dans la branche étroite (10a) prolongée, sont formés par deux paires de trous (12a, 12b, 12c; 12a', 12c, 12b) situés dans l'axe longitudinal (16) de ladite branche, spéculairement par rapport à son centre.

3. Cornières de fixation selon la revendication 1, caractérisées par le fait qu'elles comportent au moins trois évidements longitudinaux (13a, 13b, 13c) agencés par paires, dont les axes longitudinaux (15) s'étendent parallèlement les uns aux autres et parallèlement à l'axe longitudinal de la branche étroite (10a) prolongée.

4. Cornières de fixation selon l'une des revendications précédentes, caractérisées par le fait que ces cornières de fixation (10) sont découpées à l'emporte-pièce dans une tôle zinguée par galvanisation, de 3 mm d'épaisseur.

FIG. 1

FIG. 2

## FIG. 3

10a  10b

12a

12b

12c

11

12a'

16

## FIG. 4

10a

14

13a  13b  13c

10b

15

11

## FIG. 5

10

15

10b

16

10a